# EUROPÄISCHE PATENTANMELDUNG

(11) **EP 0 943 922 A1**
(43) Veröffentlichungstag der Anmeldung: **22.09.1999**
(21) Anmeldenummer: 99104849.7
(22) Anmeldetag: 11.03.1999
(51) Int. Cl.: G01P 13/00

(54) **Durchflusskontrollgerät**

(30) Priorität: 18.03.1998 DE 19811640
(71) Anmelder: Lincoln GmbH, D-69190 Walldorf (DE)
(72) Erfinder: Rodemer, Karl, 69129 Heidelberg (DE)
(74) Vertreter: KEIL & SCHAAFHAUSEN

(57) **Zusammenfassung**

Die Erfindung bezieht sich auf ein Durchflußkontrollgerät für flüssige Medien, insbesondere für unterschiedlich viskose flüssige Medien, wie Schmieröle, mit einem Mediumeinlaßstück (1) und einem Mediumauslaßstück (2), welche über ein vorzugsweise als Sichtrohr ausgebildetes Kontrollrohr (3) mit einem im Betrieb senkrechten Durchgangskanal (4) für das Medium in Strömungsverbindung stehen, und ist dadurch gekennzeichnet, daß der Durchgangskanal eine Einlaßöffnung (5) mit gegenüber dem Strömungsquerschnitt des Durchgangskanals (4) geringerem Strömungsquerschnitt aufweist, dem ein in dem Durchgangskanal (4) frei beweglicher Kontrollkörper (6) zugeordnet ist, welcher bei fehlender Strömung des Mediums den Strömungsquerschnitt der Einlaßöffnung unter Einwirkung der Schwerkraft wenigstens teilweise verschließt und bei Strömung des Mediums gegen die Wirkung der Schwerkraft in Abhängigkeit von der Viskosität des Mediums von der Einlaßöffnung (5) abgehoben wird, und daß dem Kontrollrohr (3) ggf. Mittel zur Feststellung der Lage des Kontrollkörpers (6) zugeordnet sind.

## Beschreibung

Die Erfindung bezieht sich auf ein Durchflußkontrollgerät für flüssige Medien, insbesondere für unterschiedlich viskose flüssige Medien, wie Schmieröle, mit einem Mediumeinlaßstück und einem Mediumauslaßstück, welche über ein vorzugsweise als Sichtrohr ausgebildetes Kontrollrohr mit einem im Betrieb senkrechten Durchgangskanal für das Medium in Strömungsverbindung stehen.

Derartige Durchflußkontrollgeräte werden beispielsweise in Schmieranlagen, zum Beispiel Zentralschmieranlagen, welche von einer Förderpumpe, beispielsweise einer Magnetpumpe, mit Schmieröl versorgt werden, benötigt. Hierbei muß sichergestellt werden, daß der Schmierstelle bzw. den Schmierstellen das Schmieröl in der erforderlichen Weise, beispielsweise taktweise, zugeführt wird.

Aufgabe der Erfindung ist es, ein Durchflußkontrollgerät der eingangs genannten Art vorzuschlagen, welches bei zuverlässiger und dauerhafter Funktion einfach und daher kostengünstig aufgebaut und leicht montierbar ist.

Diese Aufgabe wird erfindungsgemäß beispielsweise dadurch gelöst, daß der Durchflußkanal eine Einlaßöffnung mit gegenüber dem Strömungsquerschnitt des Durchgangskanals geringerem Strömungsquerschnitt aufweist, dem ein in dem Durchgangskanal frei beweglicher Kontrollkörper zugeordnet ist, welcher bei fehlender Strömung des Mediums den Strömungsquerschnitt der Einlaßöffnung unter Einwirkung der Schwerkraft wenigstens teilweise verschließt und bei Strömung des Mediums gegen die Wirkung der Schwerkraft in Abhängigkeit von der Viskosität des Mediums von der Einlaßöffnung abgehoben wird, und daß dem Kontrollrohr ggf. Mittel zur Feststellung der Lage des Kontrollkörpers zugeordnet sind.

Mit Hilfe des Mediumeinlaßstückes und des Mediumauslaßstückes läßt sich das kompakte Durchflußkontrollgerät einfach in die Leitung zwischen der Schmierstoffpumpe und der Schmierstelle, beispielsweise den Spritzdüsen einer Zentralschmieranlage, eingeschalten, so daß ein Ausfall der Förderpumpe sofort festgestellt werden kann. Während bei Förderung des Schmierstoffe der Verschlußkörper aus seiner Ausgangslage an der Einlaßöffnung des Durchgangskanals abgehoben ist, fällt der Verschlußkörper bei Ausfall der Förderpumpe auf die Einlaßöffnung zurück, was über das Kontrollrohr einfach festgestellt werden kann. Ist das Kontrollrohr als Sichtrohr, also mit durchsichtiger Wandung, ausgebildet, kann die Lage des Verschlußkörpers optisch, d.h. auch mit bloßem Auge, kontrolliert werden. Für den Fall, daß das Kontrollrohr nicht durchsichtig ist, aber nicht nur dann, kann dem Kontrollrohr ferner eine zum Beispiel elektrisch arbeitende Überwachungseinrichtung in Form von Mitteln zur Feststellung der Lage des Kontrollkörpers zugeordnet sein, so daß auf diese Weise ein Ausfall der Förderpumpe sofort, zum Beispiel optisch oder akustisch, angezeigt werden kann.

Der Verschlußkörper, welcher im Querschnitt größer ist als der Strömungsquerschnitt der Einlaßöffnung aber zumindest geringfügig kleiner als der Störmungsquerschnitt des Durchgangskanals, ist vorzugsweise als Kugel ausgebildet, um eine möglichst störungsfreie Funktion des Durchflußkontrollgerätes zu gewährleisten.

In besonderer Ausgestaltung des Erfindungsgedankens nimmt der Strömungsquerschnitt des Kontrollrohres von der Einlaßöffnung aus zum Mediumauslaßstück hin, also von unten nach oben, kontinuierlich oder stufenweise zu. Auf diese Weise kann erreicht werden, daß der Kontrollkörper unabhängig von der Viskosität des geförderten Mediums jeweils ein bestimmtes Niveau innerhalb des Durchgangskanals einnimmt.

Ein weiteres fakultatives Erfindungsmerkmal besteht darin, daß dem Kontrollkörper in seiner Ausgangslage unmittelbar über der Einlaßöffnung ein Sensor, zum Beispiel in Form eines Näherungsschalters, zugeordnet ist. Auf diese Weise kann der Ausfall der Förderpumpe zuverlässig selbsttätig kontrolliert werden.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: im Bereich des Kontrollrohres geschnitten, ein die Erfindung aufweisendes Durchflußkontrollgerät in Seitenansicht, und
- Fig. 2a und 2b: im Vertikalschnitt sowie im Horizontalschnitt eine Ausführungsform des erfindungsgemäßen Durchflußkontrollgerätes mit einem Näherungsschalter im Bereich der Ausgangslage des Kontrollkörpers.

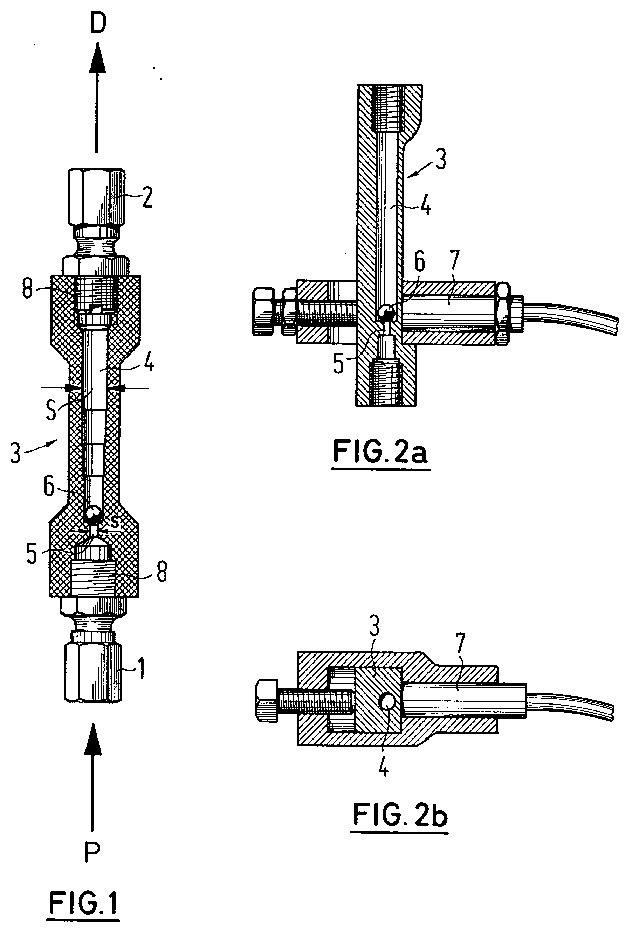

Das Durchflußkontrollgerät, wie es in den Zeichnungen dargestellt ist, kann mit Hilfe eines Mediumeinlaßstückes 1 und eines Mediumauslaßstückes 2 in die Leitung von der Förderpumpe P, zum Beispiel einer Zentralschmieranlage, zu der Düse bzw. den Düsen D eingeschaltet werden. Mediumeinlaßstück 1 und Mediumauslaßtstück 2 sind stirnseitig in die beiden Enden eines Kontrollrohres 3 über Gewindeverbindungen 8 eingesetzt. Das Kontrollrohr 3 kann aus durchsichtigem Material als Sichtrohr ausgebildet sein. Es weist einen im Betrieb senkrechten im wesentlichen kreiszylindrischen Durchgangskanal 4 für das zu kontrollierende Medium auf. Der Durchgangskanal 4 hat eine Einlaßöffnung 5 mit gegenüber dem Strömungsquerschnitt S des Durchgangskanals 4 geringerem Strömungsquerschnitt s. Dem Strömungsquerschnitt s ist ein in dem Durchgangskanal 4 frei beweglicher als Kugel ausgebildeter Kontrollkörper 6 zugeordnet. Der Kontrollkörper 6 schließt bei fehlender Strömung des Mediums den Strömungsquerschnitt s der Einlaßöffnung 5 aufgrund der Einwirkung der Schwerkraft wenigstens teilweise. Bei Strömung des Mediums hebt sich der Kontrollkörper 6 gegen die Wirkung der Schwerkraft in Abhängigkeit der Viskosität des Mediums und dem Strömungsquerschnitt S des Durchgangskanals 4 bis auf ein bestimmtes Niveau. Wie aus Fig. 1 ersichtlich, nimmt der Strömungsquerschnitt S des Durchgangskanals 4 des Kontrollrohres 3 von der Einlaßöffnung 5 aus zum Mediumauslaßstück 2 hin, also von unten nach oben, stufenweise zu. Auf diese Weise wird u.a. verhindert, daß der Kontrollkörper 6 unter der Wirkung des strömenden Mediums bis an das obere Ende des Durchgangskanals 4 angehoben wird und den Auslaßkanal in dem Mediumauslaßtstück 2 verschließt.

Wie aus den Fig. 2a und 2b ersichtlich, kann an das Kontrollrohr 3 in Höhe des Kontrollkörpers 6 in dessen Ausgangslage bei fehlender Strömung ein als Näherungsschalter ausgebildeter Sensor 7 festgeklemmt werden. Mit Hilfe des Sensors 7 kann also selbsttätig festgestellt und signalisiert werden, ob die Förderpumpe P ausgefallen ist oder nicht.

### Bezugszeichenliste:

- 1: Mediumeinlaßstück
- 2: Mediumauslaßstück
- 3: Kontrollrohr, insbesondere Sichtrohr
- 4: Durchgangskanal
- 5: Einlaßöffnung
- 6: Kontrollkörper
- 7: Sensor, insbesondere Näherungsschalter
- 8: Gewindeverbindungen
- S: Strömungsquerschnitt des Durchgangskanals
- s: Strömungsquerschnitt der Einlaßöffnung

## Patentansprüche

1. Durchflußkontrollgerät für flüssige Medien, insbesondere für unterschiedlich viskose flüssige Medien, wie Schmierole, mit einem Mediumeinlaßstück (1) und einem Mediumauslaßstück (2), welche über ein vorzugsweise als Sichtrohr ausgebildetes Kontrollrohr (3) mit einem im Betrieb senkrechten Durchgangskanal (4) für das Medium in Strömungsverbindung stehen, **dadurch gekennzeichnet,** daß der Durchgangskanal (4) eine Einlaßöffnung (5) mit gegenüber dem Strömungsquerschnitt (S) des Durchgangskanals (4) geringerem Strömungsquerschnitt (s) aufweist, dem ein in dem Durchgangskanal (4) frei beweglicher Kontrollkörper (6) zugeordnet ist, welcher bei fehlender Strömung des Mediums den Strömungsquerschnitt (s) der Einlaßöffnung (5) unter Einwirkung der Schwerkraft wenigstens teilweise verschließt und bei Strömung des Mediums gegen die Wirkung der Schwerkraft in Abhängigkeit von der Viskosität des Mediums von der Einlaßöffnung (5) abgehoben wird, und daß dem Kontrollrohr (3) ggf. Mittel zur Feststellung der Lage des Kontrollkörpers (6) zugeordnet sind.

2. Gerät nach Anspruch 1, **dadurch gekennzeichnet**, daß der Verschlußkörper (6) eine Kugel ist.

3. Gerät nach Anspruch 1 oder 2, **dadurch gekennzeichnet,** daß der Strömungsquerschnitt (S) des Kontrollrohres (3) von der Einlaßöffnung (5) aus zum Mediumauslaßstück (2) hin, also von unten nach oben, kontinuierlich oder stufenweise zunimmt.

4. Gerät nach einem der vorhergehenden Ansprüche, **dadurch gekennzeichnet,** daß der Kontrollkörper (6) in seiner Ausgangslage unmittelbar über der Einlaßöffnung (5) ein Sensor (7), zum Beispiel in Form eines Näherungsschalters, zugeordnet ist.
